Europäisches Patentamt

European Patent Office

Office européen des brevets

(19)

(11) Publication number: **0 048 307**

**A1**

(12) # EUROPEAN PATENT APPLICATION

(21) Application number: **80200897.9**

(22) Date of filing: **23.09.80**

(51) Int. Cl.³: **F 16 L 1/02**

(43) Date of publication of application:
**31.03.82 Bulletin 82/13**

(84) Designated Contracting States:
**AT BE CH DE FR GB IT LI NL SE**

(71) Applicant: **Ballast-Nedam Groep N.V.**
**Laan van Kronenburg 2**
**NL-1180 BE Amstelveen(NL)**

(71) Applicant: **Waco Beton B.V.**
**IJsseldijk 169**
**NL-2922 BJ Krimpen a/d IJssel(NL)**

(72) Inventor: **Wolters, Tjako Aaldrik**
**Sanatoriumlaan 4**
**NL-3705 AP Zeist(NL)**

(72) Inventor: **Roggekamp, Aloysius Gerardus Maria**
**Hazeveld 15**
**NL-2405 AD Alphen a.d. Rijn(NL)**

(72) Inventor: **Griffioen, Dirk Hendrik**
**Hogerheydestraat 44**
**NL-2461 XE Ter Aar(NL)**

(74) Representative. **Konings, Lucien Marie Cornelis**
**Joseph et al,**
**OCTROOIBUREAU ARNOLD & SIEDSMA Sweelinckplein**
**1**
**NL-2517 GK Den Haag(NL)**

(54) Method and device for laying piping and piping laid by said method.

(57) The operation of correct positioning piping elements
(50,52) joining one another may be performed with the aid of
locating means (11) which are fastened to the piping
elements (50,52) to be laid.

FIG.1

EP 0 048 307 A1

Croydon Printing Company Ltd.

-1-

Method and device for laying piping and piping laid by said method.

The invention relates in the first place to a method of laying a piping comprising a series of prefabricated, concrete piping elements aligned to one another with the aid of joint bridging means. A difficulty resides in positioning each piping element to be laid. This operation requires much time and there is a risk of damaging the sealing strip. Therefore, piping laid by using a known method is sometimes not watertight. The invention has for its object to avoid said drawbacks. For this purpose each time a piping element to be laid is deposited in joint relation with a piping element already positioned, wherein the former element is provided with locating means extending in the axial direction of this piping element further than the joint bridging means, said piping element being deposited with the aid of the locating means at an axial distance from the previously positioned piping element substantially in line to the previously positioned piping element, after which the piping element maintained in line with the aid of the locating means is driven into the position in which it joins the previously positioned piping element.

0048307

When the locating means are each time releasably fastened to a piping element and are repeatedly used, the method according to the invention requires only a low investment device. The invention furthermore relates to a device for carrying out the method according to the invention which is characterized by locating means to be releasably fastened to a piping element to be laid in a manner such that they extend in an axial direction beyond the joint bridging means.

The piping element to be laid is preferably driven into its correct position by drawing it thereto with the aid of drawing means, whilst at the end remote from the previously positioned piping element it is grasped by a hook and the locating means of the previously positioned piping element are used as anchoring means for the drawing means. In this method the location previously aligned is fully safeguarded against disturbance during the displacement.

A releasable and yet firm connection between the locating means and the piping element is established when the locating means are each time releasably fastened to an anchor embedded in the concrete of a piping element.

A shift in longitudinal and transverse direction and relative angular turn about the longitudinal axis can be avoided in a simple manner when with the aid of the locating means the two lower corners of a piping element are grasped.

The manipulations for displacing and locating the piping elements can partly be performed in an uninterrupted operation when each time a piping element is suspended to a lifting device through hangers engaging locating means fastened to the piping element.

The aforesaid anchors on a piping element can be avoided by fastening the locating means through a fastening member extending in the joint between two piping elements to at least one pin extending in an axial direction in said two piping elements and bridging the joint and/or by fastening the locating means to a piping element through a hook extending in the joint between two piping elements as far as into a recess preferably accommodating a sealing strip.

The piping laid by carrying out the method according the invention can be characterized by locating means arranged on the piping elements and extending in an axial direction beyond the joint bridging means.

A safe seal between the piping elements is obtained by joint bridging means comprising an elastic sealing strip and at least two pins bridging the joint and extending into two opposite recesses bounding the joint, said pins limiting the relative transverse movements of the joining piping elements, but allowing relative angular position variations.

The joint bridging means preferably comprise a sealing strip having sealing tags of sawtooth profile.

A sealing strip provided with a reinforcing tape may itself fulfil the sealing function as well as the function of maintaining the alignment of the joined piping elements.

Even in a piping characterized by rims of the joining piping elements gripping one around the other at each joint with the interposition of an elastic sealing strip and by at least two pins bridging the joint and extending into opposite joint-bounding recesses, said pins limiting the relative transverse movements of the joining piping elements, but allowing relative angular position variations, the pins ensure that the piping elements remain substantially aligned to one another and that, therefore, the sealing strip can satisfactorily continue fulfilling its function in a gap which will neither become too wide nor too narrow.

The invention will be described more fully hereinafter with reference to a drawing.

The drawing shows schematically in

Figure 1 a perspective illustration of the method in accordance with the invention,

Figure 2 detail II in a later stage of the method of Figure 1,

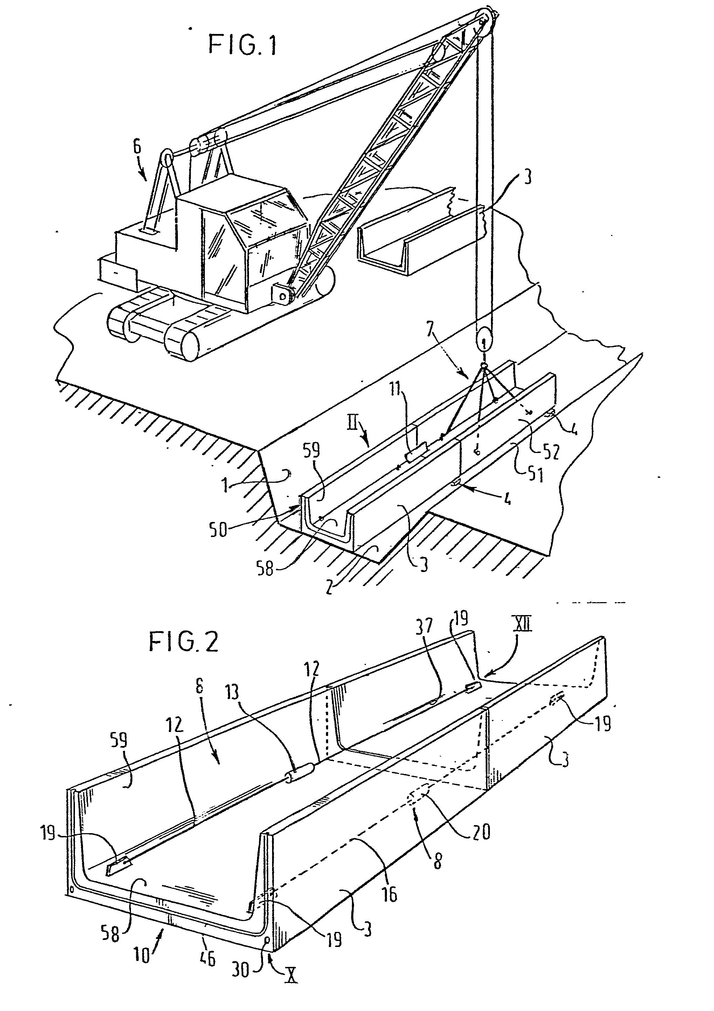

Figures, 3, 4, 5 and 6 each a side elevation of a piping in successive stages of deposition by carrying out the method of Figure 1,

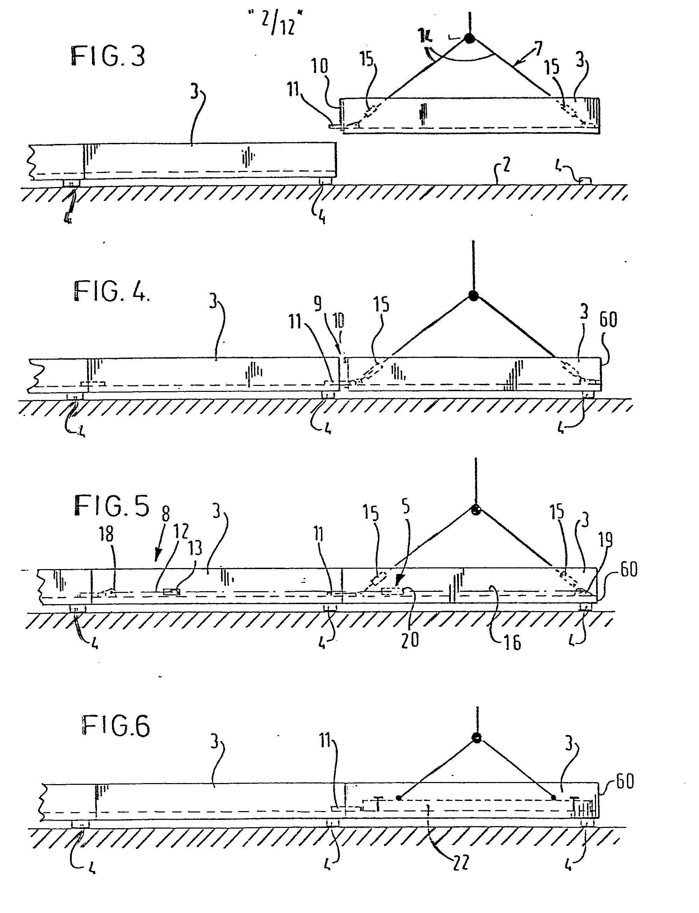

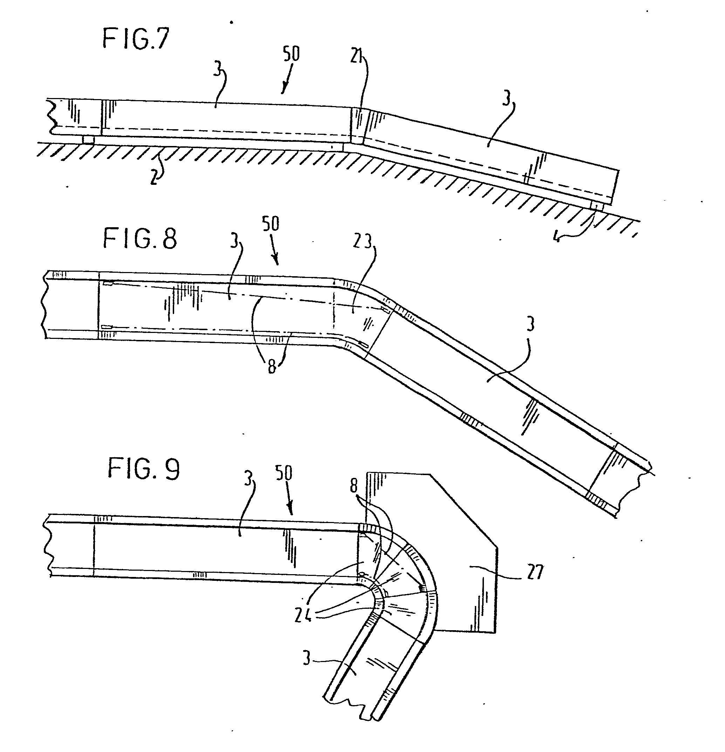

Figure 7 a side elevation like Figure 6 of a deposited piping fraction in sloping position,

Figures 8 and 9 each a plan view of a deposited piping fraction in a bend,

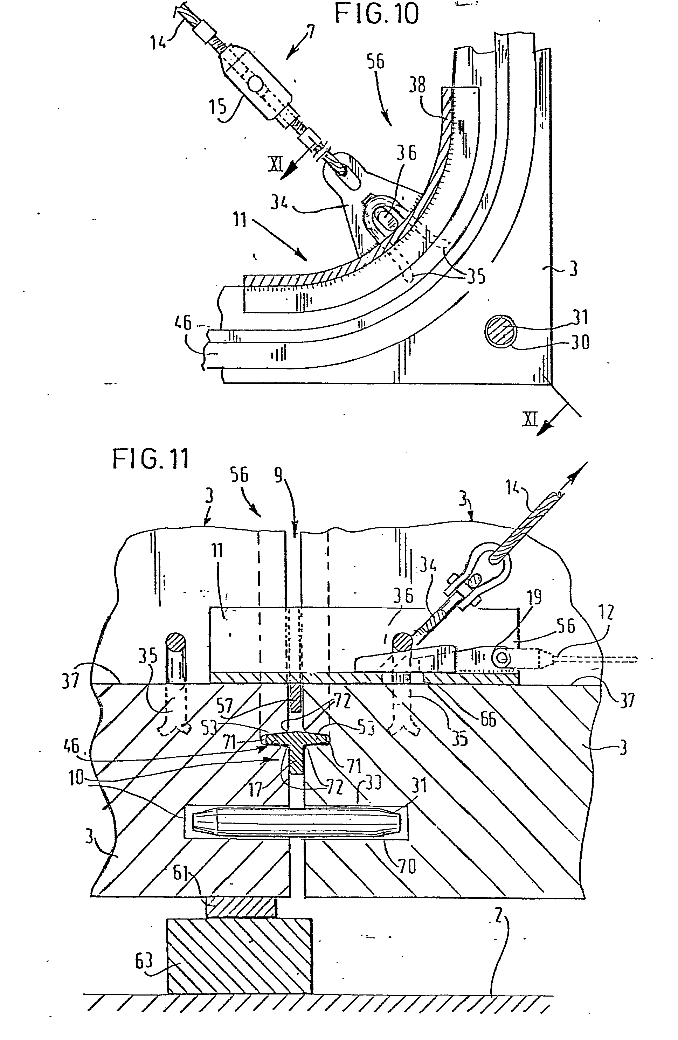

Figure 10 an enlarged front view of detail X of Figure 2,

Figure 11 a sectional view taken on the line XI-XI of Figure 10,

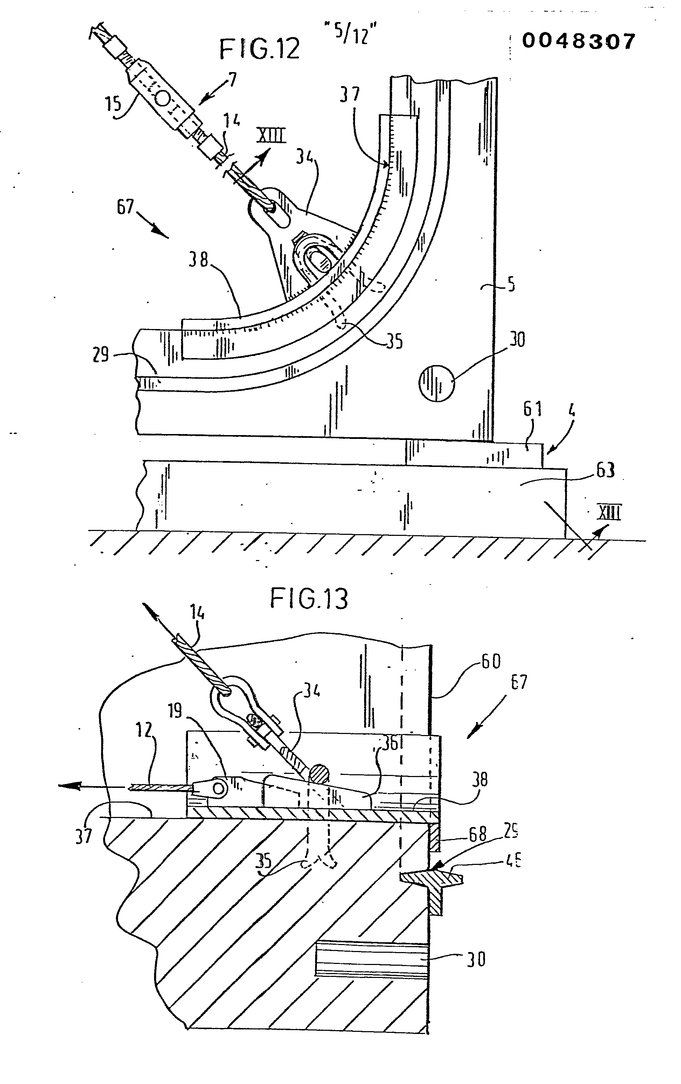

Figure 12 an enlarged rear view of detail XII of Figure 2,

Figure 13 a sectional view taken on the line XIII-XIII of Figure 12,

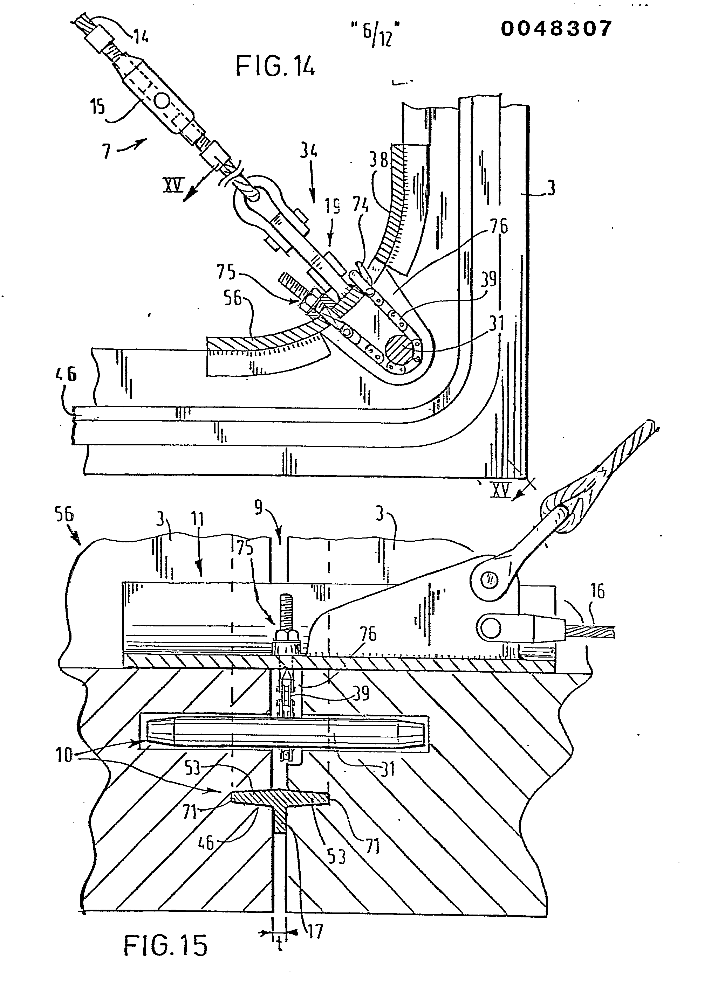

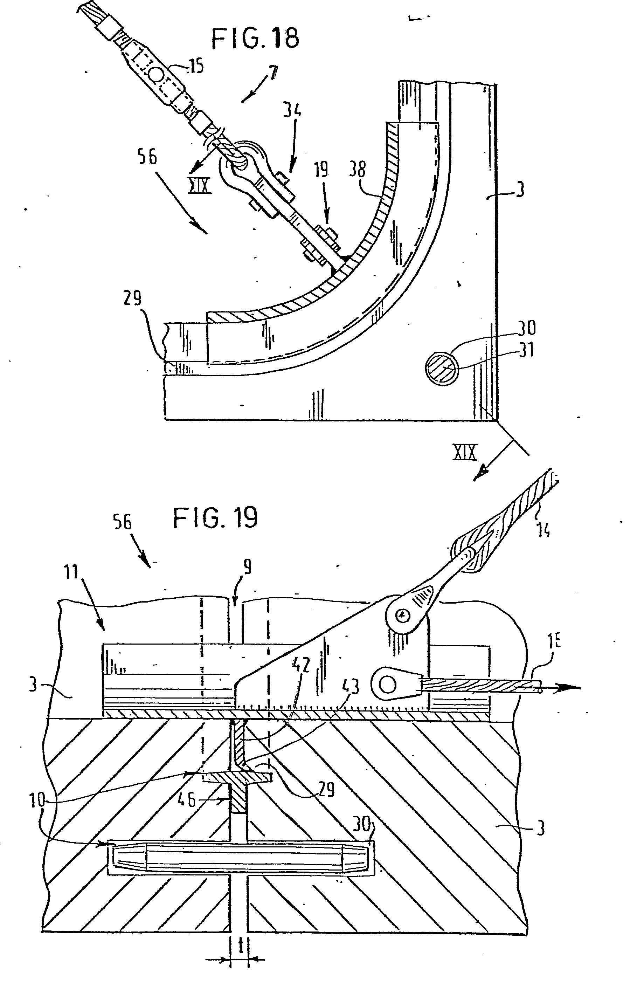

Figures 14 and 18 different variants of Figure 10,

Figure 15 a sectional view taken on the line XV-XV in Figure 14,

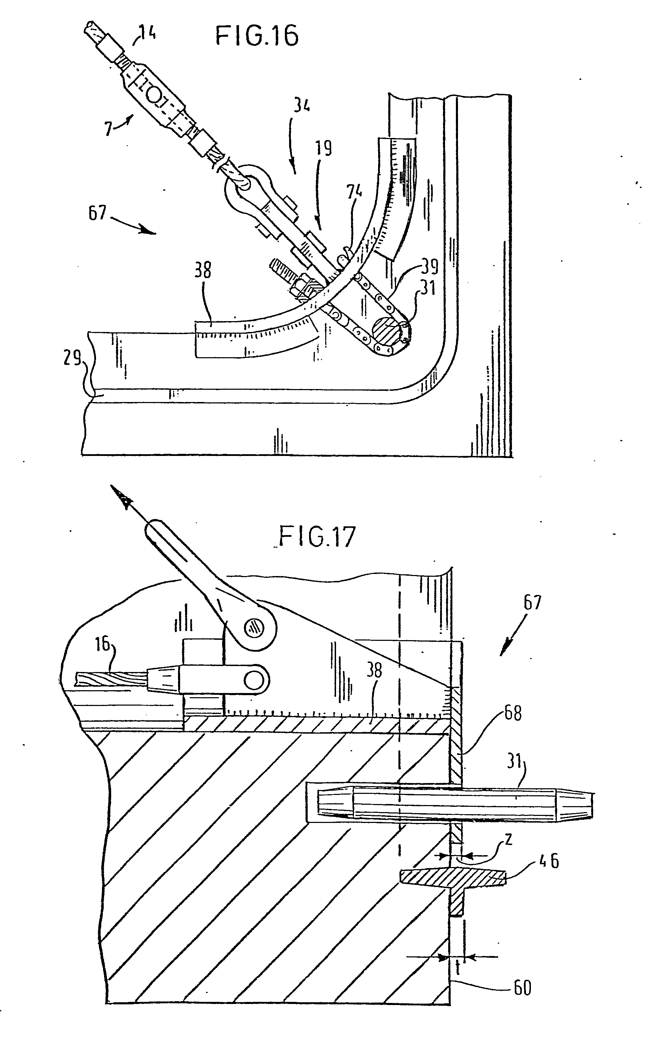

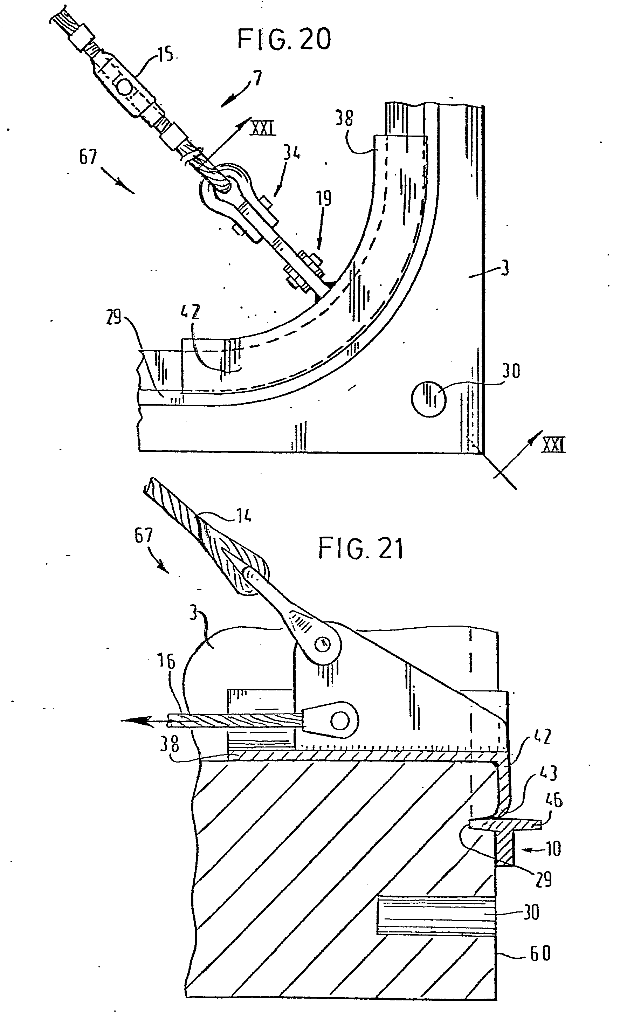

Figures 16 and 20 a variant of Figure 12,

Figure 17 a variant of Figure 13,

Figure 19 a sectional view taken on the line XIX-XIX in Figure 18,

Figure 21 a sectional view taken on the line XXI-XXI in Figure 20,

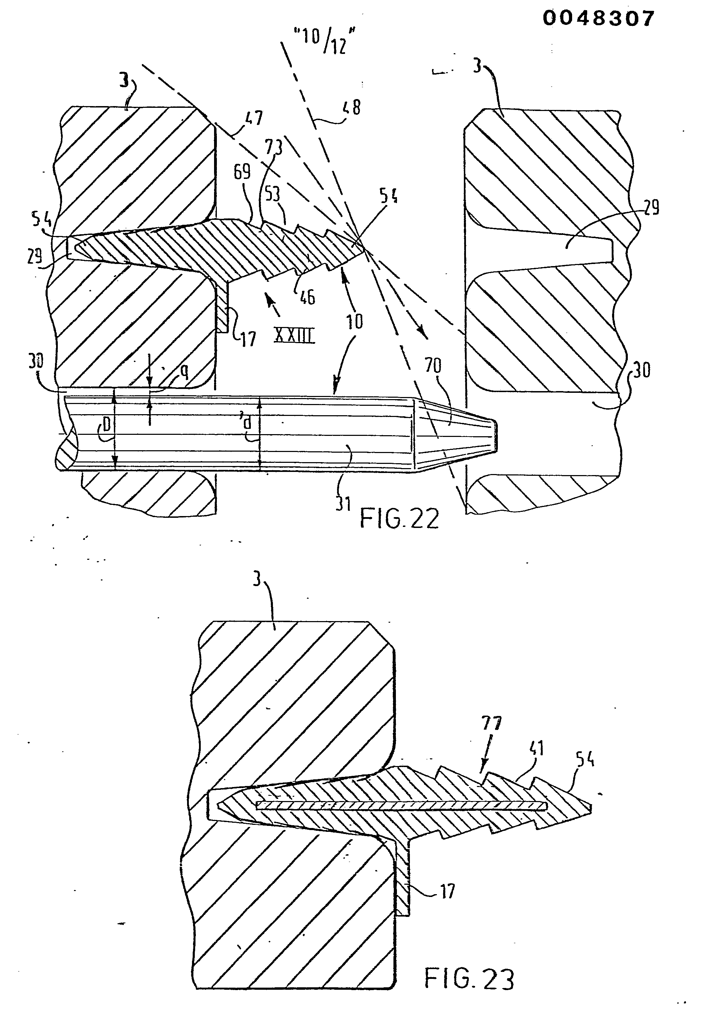

Figure 22 a cross-sectional view taken on the joint during the positioning of a piping element,

Figure 23 a variant of detail XXIII of Figure 22,

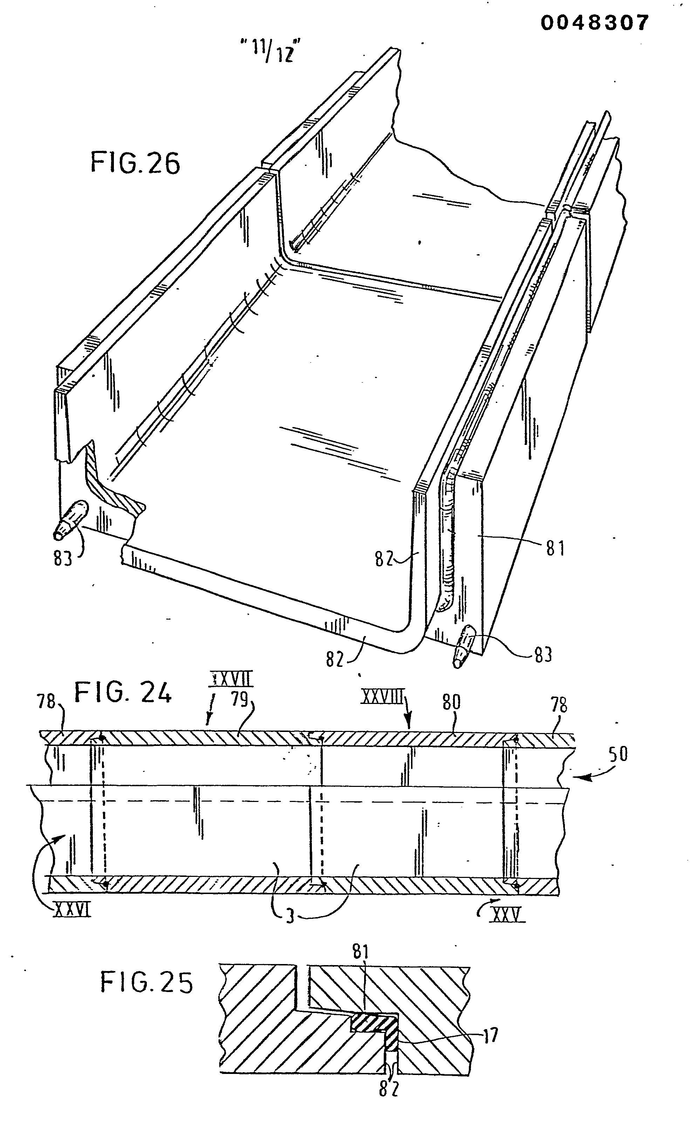

Figure 24 a vertical longitudinal sectional view of a fraction of a piping laid in accordance with the invention,

Figure 25 on an enlarged scale detail XXV of Figure 24, and

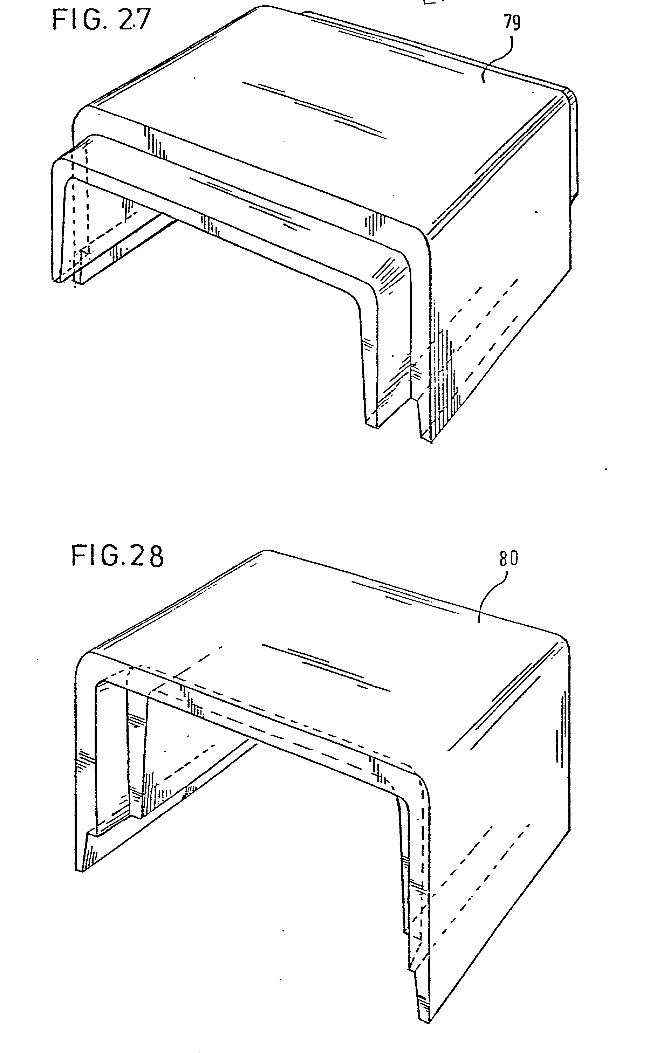

Figures 26, 27 and 28 enlarged, perspective views of details XXVI, XXVII and XXVIII respectively of Figure 24.

In the method according to the invention a piping 50 is deposited on the flat bottom 2 of a ditch 1 with the interposition of setting means 4. Instead of the bottom 2 of a ditch 1 a different foundation may be used. In the examples shown the piping 50 has a hollow, U-shaped profile, on which afterwards a cover can be placed in order to allow access to, replacement or repair of electric cables, telephone cables or water pipes and/or tubes, for example, of a municipal heating system, which have been accommodated in the piping 50. The piping 50 has to be watertight.

The piping 50 consists of a series of prefabricated, concrete piping elements 3 aligned to one another with the aid of joint bridging means 10 at each joint 9. The piping elements 3 to be laid, previously put ready for deposition along the ditch 1 are each time picked up with the aid of a lifting device 6 and a suspension device 7 and positioned at a place 51 at a given distance from the previously positioned piping element 3 in the suspension device. Subsequently the deposited piping element 52 is drawn with the aid of drawing means 8 consisting of draw cables 12, cylinders 13 and draw rings 19 towards the former piping element 3 to an extent such that the elastic sealing strip 46 arranged in the joint 9 ensures a watertight closure. After the deposition of municipal heating tubes, cables and the like the piping 50 of U-shaped profile is covered in a watertight manner with a cover (not shown), after which the ditch 1 may be filled up with earth or the cover may serve as a sidewalk or a road pavement.

As shown in Figures 3 to 6, the piping elements 3 to be laid have fastened to them locating means 11, which extend in the axial direction of the piping element 3 beyond the joint bridging means 10. These locating means 11 are repeatedly used and are, therefore, releasably fastened to the piping element 3. The locating means 11 (see Figure 10) comprise two locating elements 11 fitting in the rounded-off inner corners 37 of the piping element 3 and having to this end a similarly rounded-off plate 38, to which is welded a vertically extending ridge 57 extending into the joint 9. An appreciable portion 11 of the piping element 3 protrudes from the plate 38 to the outside and constitutes a stop in a vertical and a transverse direction for the corresponding inner corner 37 of the deposited piping element 3. In this way the bottom surfaces 58 as well as the downwards slightly diverging sidewalls 59 of the interengaging piping elements 3 are aligned, whilst the piping element 3 of Figures 3 and 4 is held at a given distance from the piping element 3 already positioned. The level of the end 60 of the piping element 3 remote from the joint 9 is maintained with the aid of setting means 4 consisting (see Figure 12) of a wedge 61 bearing on a beam 63. The plate 38 is releasably fastened to an eye-shaped anchor 35 embedded in the concrete of the piping element 3 and extending through a recess 66 of the plate 38 and being firmly fixed thereto by means of a wedge 36 (Figures 10 and 11). To the plate 38 employed as an anchoring means 56 is furthermore welded a hoisting eyelet 34, which can be engaged each time by one of four cables 14 of a four-cable suspension device 7. The cables 14 include length setting members 15 for arranging the piping elements 3 in the position desired for the deposition. Moreover, a draw eye 19 is welded to the plate 38.

At each inner corner 37 (see Figures 12 and 13) a drawhook 67 is fastened by means of a wedge 36 to an eye-shaped anchor 35 embedded in the concrete of the piping element 3, a vertical strip 68 of said anchor, which grasps behind the end 60, being welded to the bent plate 38. Furthermore, a hoisting eyelet 34 for a cable 14 and a draw eyelet 19 are welded to the plate 38.

Between each draw eyelet 19 of the anchor means 56 of the piping element 3 already positioned and each draw eyelet 19 of the drawhook 67 of the piping element 3 to be deposited is arranged a draw cable 12 with a hydraulic stretcher 13 in order to drive the aligned piping element 3 into the sealing position in contact with the positioned piping element 3, during which operation the locating means 11 arranged on the piping element 3 to be deposited maintain these piping elements 3 in alignment.

During this manipulation the joint bridging means 10 are moved into their sealing state. These joint bridging means 10 comprise an elastic sealing strip 46 of T-shaped profile as well as two pins 31, also termed dowel pins. The transverse strip 17 of the T-shaped profile prevents a direct contact between the concrete of the consecutive elements 3 so that slight settlings cannot cause damage. Each pin 31 is accommodated in corresponding, slightly larger bores 30 of the joining piping elements 3 and extends in the axial direction of the piping 50, whilst bridging the joint 9. These pins 31 have a bevelled end 70. The sealing strip 46 has two substantially wedge-shaped tags 53 fitting in correspondingly shaped grooves 71 of the piping elements 3. These grooves 71 converge inwardly and have a rounded-off part 72 at the entrance in order to enhance a damage-free penetration of the tags 53. Each tag 53 has a wedge-shaped tip 54 (see Figure 22). The sawtooth profile of the tags 53 is such that the slope 69 facing the tip 54 is the slightly inclined flank of each sawtooth 73. The pins 31 axially extend outwardly beyond the tag 53 away from the same piping element 3 so that along viewing lines 47 and 48 of the shortest possible length of pins 31 along the tag 53 it can be assessed whether the pins are correctly in line with the bores 30. Each bore 30 has a diameter D of, for example, 44 mms for a diameter $d$ of a pin 31 of, for example, 40 mms, so that a clearance $q$ is obtained which does allow relative angle variations and a small relative, transverse shift of the joining piping elements 3, but which prevents disturbance of the sealing effect of the sealing strip 46, that is to say, a large transverse shift. In order to avoid the use of the anchor 35 of Figures 10 to 13 embedded in the concrete, each plate 38 of the anchoring means 56 is fastened, as shown in Figures 14 to 17, to a pin 31 by means of a flexible member, for example, a chain 39 gripping around said pin and extending in the joint 9, said member gripping on the one hand around a hook 74 welded to the plate 38 and being fastened on the other hand to the plate 38 by way of a chain stretcher 75. In order to maintain a small joint width $t$ in the case of a broader chain 39, the latter is housed in an encasing 76. The drawhook 67 is correspondingly fastened to a pin 31. It is also feasible to provide a hole in the strip 68 of Figure 13 for passing the pin 31 (see Figure 17). It should be noted that as shown in Figures 14 to 17 the pins 31 are arranged on the inner side of the sealing strip 46. If the chain width $z$ is smaller than the width $t$ of the joint 9, the encasing 76 is redundant. When a piping element 3 is lifted by the pins 31 and the anchoring means 56 and 67, the latter are fastened to one another in an axial direction by means of the draw mechanism 5 comprising the draw cable 16 with the stretcher 20 and the draw eyelets 19.

Intead of using "releasable" locating means and hoisting eyelets to be directly arranged on the anchors 35, a hoisting yoke 22 may be employed, on which the locating means are arranged.

Figures 7, 8 and 9 show pipings 50 having fitting pieces 21, 23 and 24 respectively, which are disposed between straight piping elements 3. At the bend of Figure 9 is shown a reaction foundation 27.

The embodiment of Figures 18 to 22 is distinguished from that of Figures 10 to 13 in that the plates 38 of the anchoring means 67 and 56 each extend by a transverse rim 42 resisting to bending and a bent-over strip 43 as far as into the sealing slot 29. Thus during the transport of a piping element 3 by means of the stretching cable 16, the draw eyelets 19 and the hydraulic rams 20, the anchoring means 67 and 56 are immovably held in place.

A further development of the sealing strip shown in Figure 23 is capable of withstanding transverse forces so that the pins 3˙ may be dispensed with. For this purpose a reinforcing tape 41 is embedded in the sealing strip 77. The tape 41 may be made of steel, synthetic resin, glass fibre, reinforced synthetic resin and the like in accordance with the requirements of strength.

The piping 50 of Figure 24 comprises piping elements 3 of U-shaped profile and cover elements 78, 79 and 80, the elements 79 and 80 having transverse rims of shapes differing to an extent such that the cover element 80 may be removed to leave a manhole. The sealing strip 81 is arranged between rims 82 of joining piping elements 3 and cover elements 78, 79, 80 respectively. Pins 83 corresponding with the pins 31 but extending axially less far as the rims 82 ensure that the sealing effect of the elastic sealing strips 81 will not be disturbed. The rims 82 are in this case used as locating means fastened to the piping elements, since they co-operate as locating stops during the mounting operation.

– 1 –

## CLAIMS

1. A method of laying a piping comprising a series of prefabricated, concrete piping elements aligned to one another with the aid of joint bridging means characterized in that each time a piping element to be laid is deposited in joint relation with a piping element already positioned, wherein the former element is provided with locating means extending in the axial direction of this piping element further than the joint bridging means, said piping element being deposited with the aid of the locating means at an axial distance from the previously positioned piping element substantially in line to the previously positioned piping element, after which the piping element maintained in line with the aid of the locating means is driven into the position in which it joins the previously positioned piping element.

2. A method as claimed in claim 1 characterized in that the locating means are each time releasably fastened to a piping element and are repeatedly used.

3. A method as claimed in claim 1 or 2 characterized in that the piping element to be laid is driven into its correct position by drawing it thereto with the aid of drawing means, whilst at the end remote from the previously positioned piping element it is grasped by a hook and in that the locating means of the previously positioned piping element are used as anchoring means for the drawing means.

4. A method as claimed in any one of the preceding claims characterized in that the locating means are each time releasably fastened to an anchor embedded in the concrete of a piping element.

5. A method as claimed in any one of the preceding claims characterized in that with the aid of the locating means the two lower corners of a piping element are grasped.

6. A method as claimed in any one of the preceding claims characterized in that each time a piping element is suspended to a lifting device through hangers engaging locating means fastened to the piping element.

7. A method as claimed in any one of the preceding claims characterized in that locating means are fastened through a fastening member extending in the joint between two piping elements to at least one pin extending in an axial direction in said two piping elements and bridging the joint.

8. A method as claimed in any one of the preceding claims characterized in that the locating means are fastened to a piping element through a hook extending in the joint between two piping elements as far as into a recess preferably accommodating a sealing strip.

9. A piping laid by carrying out the method claimed in claim 1 comprising a series of prefabricated, concrete piping elements joining one another in line with the aid of joint bridging means characterized by locating means arranged on piping elements and extending in an axial direction beyond the joint bridging means.

10. A piping laid by carrying out the method claimed in claim 1 comprising a series of prefabricated, concrete piping elements joining one another in line with the aid of joint bridging means characterized by joint bridging means comprising an elastic sealing strip and at least two pins bridging the joint and extending into two opposite recesses bounding the joint, said pins limiting the relative transverse movements of the joining piping elements, but allowing relative angular position variations.

11. A piping as claimed in claim 9 or 10 characterized in that the joint bridging means comprise a sealing strip having sealing tags of sawtooth profile.

12. A piping as claimed in claim 9 or 10 characterized in that the joint bridging means comprise a sealing strip provided with a reinforcing tape.

13. A piping laid by carrying out the method claimed in claim 1 comprising a series of prefabricated, concrete piping elements joining one another in line with the aid of joint bridging means characterized by rims of the joining piping elements gripping one around the other at each joint with the interposition of an elastic sealing strip and by at least two pins bridging the joint and extending into opposite joint-bounding recesses, said pins limiting the relative transverse movements of the joining piping elements, but allowing relative angular position variations.

14. A device for carrying out the method claimed in any one of claims 1 to 8 characterized by locating means to be releasably fastened to a piping element to be laid in a manner such that they extend in an axial direction beyond the joint bridging means.

BAD ORIGINAL

AMENDED
CLAIMS

– 1 –

## CLAIMS

1. A method of laying a piping comprising a series of prefabricated, concrete piping elements (3) aligned to one another with the aid of joint bridging means (10), wherein each time a piping element (3) to be laid is deposited in joint relation with a piping element (3) already positioned, wherein the former element is provided with locating means (11) extending in the axial direction of this piping element (3) further than the joint bridging means (10), said piping element (3) being deposited with the aid of the locating means (11) at an axial distance from the previously positioned piping element (3) substantially in line to the previously positioned piping element (3), after which the piping element (3) maintained in line with the aid of the drawing means (12) is driven into the position in which it joins the previously positioned piping element (3), characterized in that the locating means (11) each time are arranged in the corners (37) of the piping elements (3) having a U-shaped profile and open top sides, so that the locating means (11) arranged in the corners (37) of the piping element (3) to be laid cooperate with the corners (37) of the U-shaped piping element already laid.

2. A method as claimed in claim 1, characterized in that the locating means (11) are each time releasably fastened to an anchor (35) embedded in the concrete of a piping element (3).

3. A method as claimed in claim 1 or 2, characterized in that the piping element (3) to be laid is driven into its correct position by drawing it thereto with the aid of drawing means (12), whilst at the end remote from the previously positioned piping element (3) it is grasped by a hook and in that the locating means (11) of the previously positioned piping element (3) are used as anchoring means for the drawing means.

4. A method as claimed in any one of the preceding claims, characterized in that each time a piping element (3) is suspended from a pulling device (6) by means of hangers (14), which grip through the open top side of the U-formed piping element onto locating means (11) fastened to the piping element (3).

5. A method as claimed in any one of the preceding claims, characterized in that the locating means (11) are fastened to a piping element through a hook (42) extending in the joint (9) between two piping elements (3) as far as into a recess (29) preferably accommodating a sealing strip (17).

6. A method as claimed in any one of the preceding claims, characterized in that locating means (11) are fastened through a fastening member (39) extending in the joint (9) between two piping elements (3) to at least one pin (31) extending in an axial direction in said two piping elements and bridging the joint (9).

7. A piping laid by carrying out the method claimed in claim 1, comprising a series of prefabricated, concrete piping elements (3) joining one another in line with the aid of joint bridging means (10), whereby locating means (11) arranged on piping elements (3) extend in an axial direction beyond the joint bridging means (10).

8. A piping as claimed in claim 5 or 6, characterized in that the joint bridging means (10) comprise a

- 3 -                                    0048307

sealing strip (77) having sealing tags (53) of sawtooth
profile (73).

9. A piping as claimed in claim 6 or 7, characterized in that the joint bridging means (10) comprise a
sealing strip (77) provided with a reinforcing tape.

10. A piping laid by carrying out the method
claimed in claim 1, comprising a series of prefabricated,
concrete piping elements (3) joining one another in line with
the aid of joint bridging means (10), characterized by joint
bridging means (10) comprising an elastic sealing strip (46)
and at least two pins (31) bridging the joint (9) and extending into two opposite recesses (10) bounding the joint (9),
said pins (31) limiting the relative transverse movements of
the joining piping elements (3), but allowing relative
angular position variations.

11. A piping, comprising a series of prefabricated,
concrete piping elements (78, 79, 80) joining one another in
line with the aid of joint bridging means (10), characterized
by rims (82) of the joining piping elements (78, 79, 80)
gripping one around the other at each joint with the interposition of an elastic sealing strip (81) and by at least two
pins (83) bridging the joint and extending into opposite
joint-bounding recesses, said pins limiting the relative
transverse movements of the joining piping elements, (78, 79,
80), but allowing relative angular position variations.

12. A device for carrying out the method claimed in
any one of claims 1 to 6, characterized by locating means
(11) to be releasably fastened in the corners (37) of an
U-shaped piping element (3) to be laid in a manner such that
they extend in an axial direction beyond the joint bridging
means (10) and engage the corners (37) of an already laid,
adjoining, U-shaped piping element (3).

AMENDED
CLAIMS

FIG.1

FIG.2

FIG.3

FIG. 4.

FIG.5

FIG.6

0048307

"²/₁₂"

FIG.7

FIG.8

FIG.9

"4/12"

FIG.10

FIG.11

# FIG.12

# FIG.13

FIG.14

FIG.15

FIG.16

FIG.17

0048307

FIG.18

FIG. 19

# FIG. 20

# FIG. 21

0048307

FIG.22

FIG.23

"11/12"

FIG.26

83    82    81    82    83

FIG. 24    XXVII    XXVIII

78    79    80    78

50

XXVI    3    XXV

FIG.25    81

17

82

"12/12"

FIG. 27

79

FIG.28

80

| Category | Citation of document with indication, where appropriate, of relevant passages | Relevant to claim | CLASSIFICATION OF THE APPLICATION (Int Cl³) |
|---|---|---|---|
| | US - A - 4 079 493 (ØYGARDEN et al.) <br> * column 1, lines 22 to 33 * <br> -- | 1,2 | F 16 L 1/02 |
| | DE - A - 2 347 331 (DYCKERHOFF & WIDMANN) <br> * page 6, line 23 to page 7, line 9, fig. 1, 2 * <br> -- | 1-3, 6,9,14 | |
| A | FR - A1 - 2 263 443 (PONT-A-MOUSSON) <br> -- | | **TECHNICAL FIELDS SEARCHED** (Int. Cl³) |
| A | US - A - 3 722 038 (ARNTZ et al.) <br> -- | | |
| A | US - A - 3 667 128 (MORGAN) <br> -- | | F 16 L 1/00 |
| A | US - A - 3 233 315 (LEVAKE) <br> --- | | H 02 G 9/00 |
| A | US - A - 3 061 916 (KRETZ) <br> -- | | |
| A | DE - B - 1 052 188 (PONT-A-MOUSSON) <br> -- | | |
| A | US - A - 1 974 878 (SCRIBNER) <br> -- | | CATEGORY OF CITED DOCUMENTS |
| A | US - A - 696 737 (JONES) <br> -- | | X: particularly relevant <br> A: technological background <br> O: non-written disclosure <br> P: intermediate document |
| A | US - A - 802 577 (LYLE) <br> -- | | T: theory or principle underlying the invention <br> E: conflicting application |
| A | US - A - 722 249 (PIXLEY) <br> ---- | | D: document cited in the application <br> L: citation for other reasons |

**DOCUMENTS CONSIDERED TO BE RELEVANT**

&: member of the same patent family, corresponding document

The present search report has been drawn up for all claims

| Place of search | Date of completion of the search | Examiner |
|---|---|---|
| Berlin | 08-05-1981 | SCHLABBACH |

EPO Form 1503.1 06.78